# EUROPÄISCHE PATENTANMELDUNG

(11) **EP 2 907 680 A1**
(43) Veröffentlichungstag der Anmeldung: **19.08.2015**
(21) Anmeldenummer: 15154839.3
(22) Anmeldetag: 12.02.2015
(51) Int. Cl.: B60C 27/02

(54) **Radanordnung für ein Kraftfahrzeug und Traktionssystem und Felge hierfür**

(30) Priorität: 13.02.2014 DE 202014001473 U
(71) Anmelder: Lautenbach, Josef, 70437 Stuttgart (DE)
(72) Erfinder: Lautenbach, Josef, 70437 Stuttgart (DE)
(74) Vertreter: Patentanwälte Ruff, Wilhelm, Beier, Dauster & Partner

(57) **Zusammenfassung**

Die Erfindung bezieht sich auf eine Radanordnung (1) für ein Kraftfahrzeug umfassend ein Rad (2) mit einer Felge (4) und einem Reifen (5), und ein Traktionssystem (3) für das Rad, wobei das Traktionssystem mehrere über einen Umfang (6) des Rades verteilt positionierbare Traktionssegmente (7, 7', 7") aufweist, wobei wenigstens zwei Traktionssegmente an einem rückseitigen Ende zur lösbaren Befestigung an einer dem Rad rückseitig zugeordneten Befestigungsfläche (13) mit mindestens einem rückseitigen Einhängemittel (11) versehen sind und die Traktionssegmente zur lösbaren Befestigung an wenigstens einer dem Rad frontseitig zugeordneten Aufnahmeprofilierung (17) mindestens ein frontseitiges Verbindungsmittel (15) zum Einhängen in die frontseitige Aufnahmeprofilierung aufweisen, sowie mit wenigstens einer Spanneinrichtung (20) zum Spannen der Traktionssegmente in ihrer Funktionsstellung auf dem Rad.

## Beschreibung

Die Erfindung bezieht sich auf eine Radanordnung für ein Kraftfahrzeug umfassend ein Rad mit einer Felge und einem auf die Felge aufgezogenen Reifen, und ein Traktionssystem für das Rad, wobei das Traktionssystem mehrere über einen Umfang des Rades verteilt positionierbare Traktionssegmente aufweist, wobei wenigstens zwei Traktionssegmente an einem rückseitigen Ende zur lösbaren Befestigung an einer dem Rad rückseitig zugeordneten Befestigungsfläche mit mindestens einem rückseitigen Einhängemittel versehen sind und die Traktionssegmente zur lösbaren Befestigung an wenigstens einer dem Rad frontseitig zugeordneten Aufnahmeprofilierung mindestens ein frontseitiges Verbindungsmittel zum Einhängen in die frontseitige Aufnahmeprofilierung aufweisen, sowie mit wenigstens einer Spanneinrichtung zum Spannen der Traktionssegmente in ihrer Funktionsstellung auf dem Rad. Die Erfindung betrifft auch ein Traktionssystem und eine Felge für eine derartige Radanordnung.

Bei der Radanordnung kann es sich insbesondere um ein Schneekettensystem und ein Rad, an dem das Schneekettensystem befestigbar ist, handeln. Die Traktion eines Kraftfahrzeuges, das mit solchen Rädern auf einer Antriebsachse ausgestattet ist, kann auf schneebedeckten Straßen oder im matschigen Gelände durch Aufziehen von solchen Schneekettensystemen auf die Räder erhöht werden, womit das Kraftfahrzeug dort sicher bewegt werden kann.

Die Patentschrift US 3362450 zeigt eine Reifenkettenanordnung zur Montage von Anti-Rutschreifenketten auf einem Rad eines Kraftfahrzeuges. Mehrere Querketten können jeweils mit einem Ende an einem separaten Aufnahmering, der dem Rad rückseitig zugeordnet ist, und mit einem anderen Ende an einem separaten Adapterring, der dem Rad frontseitig zugeordnet ist, befestigt werden. Der separate Kettenaufnahmering ist nur dadurch an dem Kraftfahrzeug befestigt, dass er zwischen die Radrückseite und eine Bremstrommel eingeklemmt ist. Dazu weist er die Gestalt eines Kegelstumpfes auf und ist an die Form der Radrückseite und der Bremstrommel angepasst.

Aus der Patentschrift US 3481384 ist eine Schneekettenanordnung bekannt. Mehrere Schneeketten können jeweils mit einem Ende an einem separaten Adapter, der einem Rad eines Kraftfahrzeuges rückseitig zugeordnet ist, und mit einem anderen Ende an Hakenclips, die dem Rad frontseitig zugeordnet sind, befestigt werden. Der separate Adapter ist an dem Kraftfahrzeug mittels Radbolzen bzw. Stehbolzen zwischen Radrückseite und einer Radaufhängung befestigt, wozu der separate Adapter exakt an die Form der Radaufhängung und an die Form der Radrückseite angepasst ist.

Der Erfindung liegt als Aufgabe die Bereitstellung einer Radanordnung sowie eines Traktionssystems und einer Felge der eingangs genannten Art zugrunde, die eine einfache und schnelle Montage und Demontage des Traktionssystems an einem Rad mit der Felge ermöglicht und vielseitige Einsatzmöglichkeiten bei unterschiedlichen Radanordnungen zulässt.

Die Erfindung löst diese Aufgabe für die Radanordnung durch die Merkmale des Anspruches 1. Bei der erfindungsgemäßen Radanordnung ist die Befestigungsfläche an einem rückseitigen Felgenwulst der Felge des Rades fest angeordnet. Dabei ragt die Befestigungsfläche so von dem Felgenwulst ab, dass Montage, Demontage und Lauffähigkeit des Reifens auf der Felge nicht beeinträchtigt sind. Dadurch kann eine Anpassung der Befestigungsfläche an fahrzeugspezifische Einrichtungen wie insbesondere eine Bremsanlage oder eine Radaufhängung entfallen. Des Weiteren ist das Rad einfach, schnell und sicher an dem Kraftfahrzeug montier- und demontierbar. Die Befestigungsfläche und die wenigstens eine dem Rad frontseitig zugeordnete Aufnahmeprofilierung können permanent an dem Kraftfahrzeug verbleiben. Im Einsatzfall können die Traktionssegmente an der rückseitigen Befestigungsfläche und an der frontseitigen Aufnahmeprofilierung manuell von Hand ohne Werkzeug befestigt werden. Dabei kann jedes Traktionssegment einzeln rückseitig und frontseitig befestigt werden oder mehrere Traktionssegmente, die rückseitig und/oder frontseitig befestigt werden, können als Gruppe oder als Einheit gemeinsam befestigt werden. Im Betrieb wird ein Verrutschen der Traktionssegmente auf einer Lauffläche des Rades und ein Lösen ihrer Befestigungen durch ein Spannen der Traktionssegmente auf dem Rad mittels wenigstens einer Spanneinrichtung vermieden. Die wenigstens eine Spanneinrichtung ist vorzugsweise mechanisch ausgeführt und umfasst Federspeicherelemente, die durch metallische Federn oder durch Elastomerfedern gebildet sein können. Das Kraftfahrzeug muss zur Montage der Traktionssegmente nicht angehoben werden, kann aber über einen geringen Weg verfahren werden, um auch im Bereich der Aufstandsfläche des Rades Traktionssegmente anordnen zu können. Dabei können schon befestigte und verspannte Traktionssegmente nicht mehr verrutschen oder sich lösen. Zur Traktionserhöhung des Rades auf Schnee, Eis, Matsch, Steinen oder auch Sand können die Traktionssegmente kleingliedrige Ketten und/oder Spikes und/oder Stollen umfassen. Zusätzlich oder alternativ können die Traktionssegmente Drahtseile mit runden Drähten und/oder großgliedrige Ketten und/oder Drahtseile aus 4-Kant-Drähten und/oder Drahtseile, die abwechselnd mit kleinen Hülsen und Spikes-Ringen überzogen sind, umfassen.

In einer Weiterbildung der Erfindung ist die Befestigungsfläche als ein Befestigungsring ausgebildet, der einstückig oder durch stoffschlüssige Verbindung an dem Felgenwulst fest angeordnet ist. Hierzu kann der Befestigungsring direkt bei der Herstellung der Felge mit angeformt sein oder nachträglich an einer normalen Felge insbesondere durch Schweißen/Löten oder Kleben stoffschlüssig mit dem Felgenwulst verbunden werden.

In einer weiteren Ausgestaltung der Erfindung weist der Befestigungsring in Umfangsrichtung formschlüssig wirksame Profilierungen auf, in die das mindestens eine rückseitige Einhängemittel an dem rückseitigen Ende des Traktionssegmentes eingreift. Die formschlüssigen Profilierungen können in Form einer Mehrzahl von gleichmäßig über den Umfang der Felge verteilten Löchern in dem Befestigungsring oder einer über den Felgenumfang erstreckten Verzahnung realisiert sein, die nach innen zur Radachse hin erstreckte, alternierend angeordnete Zähne und Zahnlücken umfasst. Das mindestens eine rückseitige Einhängemittel weist vorteilhafterweise eine zu den formschlüssigen Profilierungen komplementäre Form auf. Ein Verrutschen der Traktionssegmente in Umfangsrichtung wird durch die formschlüssige Profilierung vermieden.

In einer Weiterbildung der Erfindung ist insbesondere an der rückseitigen Befestigungsfläche wenigstens eine haptische oder optische Positionierhilfe zum Ausrichten der rückseitigen Einhängemittel für einen quererstreckten Verlauf der Traktionssegmente relativ zu einer Lauffläche des Reifens vorgesehen. Dadurch ergibt sich eine bestmögliche Traktion bei drehenden Rädern. Da man bei montiertem Rad die rückseitige Befestigungsfläche nicht sieht, die Traktionssegmente aber bestimmungsgemäß quer über die Lauffläche des Rades verlaufen und dazu mit den rückseitigen Einhängemitteln an den richtigen Umfangspositionen der Befestigungsfläche eingehängt werden können, können bei gleichmäßig über den Umfang des Rades verteilten Zähnen der in Umfangsrichtung formschlüssigen Profilierungen einzelne Zähne, die länger als die übrigen sind, die richtige Umfangsposition ertastbar markieren. Diese Zähne bilden Positionierhilfen im Sinne der Erfindung. Des Weiteren ist es möglich, dass nur in Bereichen zwischen diesen längeren Zähnen sich die rückseitigen Einhängemittel einhängen lassen. Es können aber auch nur in einzelnen Abschnitten entlang des Umfanges des Rades Zähne oder Löcher der formschlüssigen Profilierungen vorhanden sein, womit nur in diesen Abschnitten rückseitige Einhängemittel eingehängt werden können. Die Positionierhilfen sind vorzugsweise rückseitig des Rades vorgesehen. Sie können aber auch frontseitig an der Felge vorgesehen sein, so dass eine Bedienperson sich an diesen frontseitigen Positionierhilfen orientieren kann, um die rückseitigen Profilierungen zum Einhängen der Traktionssegmente zu finden.

In einer Weiterbildung der Erfindung ist die wenigstens eine frontseitige Aufnahmeprofilierung einstückig mit der Felge ausgebildet oder in einer Befestigungsscheibe integriert, die frontseitig koaxial zu dem Rad fixierbar ist. Die Befestigungsscheibe kann nachträglich an eine Felge lösbar angeschraubt oder mit einer Felge durch Schweißen permanent verbunden werden. Bei einer einstückigen Ausbildung der frontseitigen Aufnahmeprofilierung mit der Felge können die Traktionssegmente front- und rückseitig direkt an der Felge befestigt werden. Weitere Bestandteile der Radanordnung sind nicht notwendig. Hierzu kann die frontseitige Aufnahmeprofilierung direkt bei der Herstellung der Felge vorgesehen und ausgeformt werden. Als Aufnahmeprofilierung ist insbesondere ein Felgenloch vorgesehen. Mehrere derartige Aufnahmeprofilierungen sind gleichmäßig über die Front der Felge verteilt angeordnet.

In einer weiteren Ausgestaltung der Erfindung ist die Befestigungsscheibe mit der Felge über Radbefestigungsmittel, insbesondere Radschrauben oder Radmuttern in Kombination mit Stehbolzen oder Radbolzen verbunden, die zur Fixierung der Felge an dem jeweiligen fahrzeugseitigen Radträger dienen.

In einer Weiterbildung der Erfindung weist die Radanordnung mindestens eine Sicherungseinheit zum Sichern der Spanneinrichtung gegen Lösen auf. Insbesondere kann eine als Sicherungsscheibe ausgebildete Sicherungseinheit alle Spanneinrichtungen gleichzeitig sichern oder jede Spanneinrichtung ist mit jeweils einer Sicherungseinheit ausgestattet.

In einer weiteren Ausgestaltung der Erfindung ist die mindestens eine Sicherungseinheit zwischen einer Freigabe- und einer Sicherungsstellung verlagerbar. Insbesondere kann es bei einer Sicherungseinheit, die mit einer Spanneinrichtung fest verbunden ist, vorteilhaft sein, bei der Montage der Traktionssegmente zuerst ein Spannen durch die Spanneinrichtung in der Freigabestellung zuzulassen und im Anschluss daran die Sicherungseinheit in die Sicherungsstelllung zu verlagern.

Die der Erfindung zugrundeliegende Aufgabe wird zudem durch ein Traktionssystem mit den Merkmalen des Anspruches 9 und durch eine Felge mit den Merkmalen des Anspruches 10 gelöst.

Vorteilhafte Ausführungsformen der Erfindung sind in den Zeichnungen dargestellt und werden nachfolgend beschrieben. Hierbei zeigen:
- Fig. 1: einen Längsschnitt einer Ausführungsform einer erfindungsgemäßen Radanordnung,
- Fig. 2: eine schematische Rückansicht der Radanordnung nach Fig. 1 mit einem Befestigungsring und verteilt angeordneten Traktionssegmenteinheiten mit Traktionssegmenten,
- Fig. 3: einen vergrößerten Ausschnitt III einer rückseitigen Befestigung einer Traktionssegmenteinheit an der Radanordnung gemäß Fig. 1,
- Fig. 4: eine Frontansicht einer Befestigungsscheibe mit den Traktionssegmenteinheiten der Radanordnung nach Fig. 1,
- Fig. 5: einen vergrößerten Ausschnitt V eines frontseitigen Verbindungsmittels in einer frontseitigen Aufnahmeprofilierung der Befestigungsscheibe und einer Spanneinrichtung mit einer Sicherungseinheit nach Fig. 1 und Fig. 4,
- Fig. 6: eine Längsschnittansicht einer weiteren Ausführungsform eines Traktionssegments und
- Fig. 7: eine Längsschnittansicht entsprechend Fig. 6 einer nochmals weiteren Ausführungsform eines Traktionssegments.

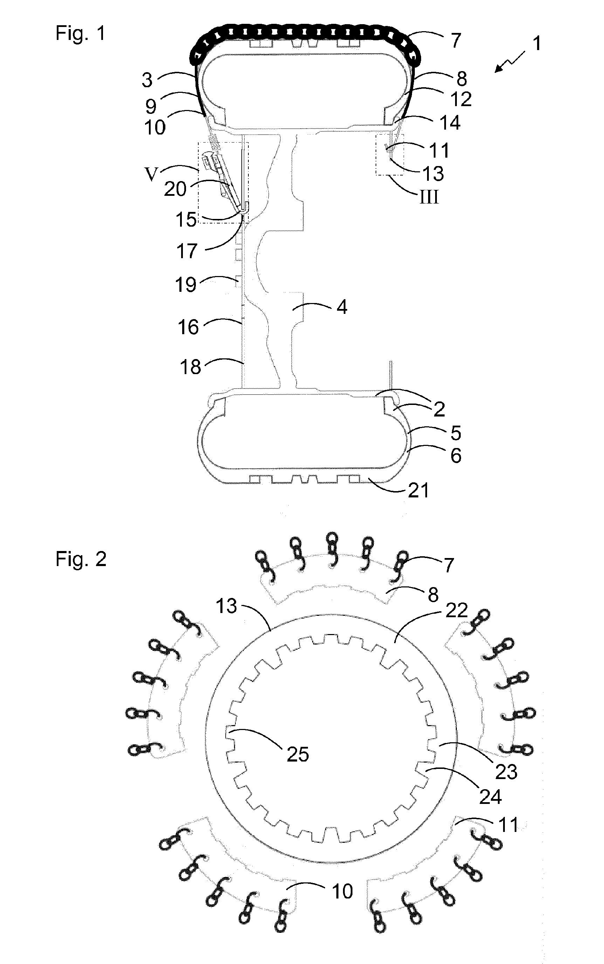

Eine Radanordnung 1 gemäß den Fig. 1 bis 5 eignet sich für ein Kraftfahrzeug, um eine Traktionserhöhung bei winterlichen Straßenverhältnissen zu bewirken. Die Radanordnung 1 umfasst ein Rad 2 und ein Traktionssystem 3. Das Rad 2 weist eine Felge 4 und einen Reifen 5 auf.

Das Traktionssystem 3 weist mehrere über einen Umfang 6 des Rades 2 gleichmäßig verteilt positionierbare Traktionssegmente 7 in Form von kleingliedrigen Ketten auf. Eine Traktionserhöhung des Rades 2 wird durch die Ketten bewirkt. Das Traktionssegment 7 ist mit weiteren nicht gezeigten Traktionssegmenten 7 an einem ersten Halteglied 8 und an einem zweiten Halteglied 9 zu einer Traktionssegmenteinheit 10 zusammengefasst. Die Traktionssegmenteinheit 10 ist mit mehreren rückseitigen Einhängemitteln 11 in Form von Haken an dem ersten Halteglied 8 lösbar an einer Rückseite 12 des Rades 2 an einer Befestigungsfläche 13 in Form eines Befestigungsringes befestigt, wobei der Befestigungsring 13 fest mit einem Felgenwulst 14 der Felge 4 verbunden ist. Der Befestigungsring 13 kann bereits bei der Herstellung der Felge 4 mit angeformt sein oder nachträglich an der Felge 4 insbesondere durch Schweißen/Löten oder Kleben fest angeordnet worden sein. Mit einem frontseitigen Verbindungsmittel 15 in Form eines Hakens, der über eine Spanneinrichtung 20 mit dem zweiten Halteglied 9 verbunden ist, ist die Traktionssegmenteinheit 10 lösbar an einer einer Frontseite 16 des Rades 2 zugeordneten, frontseitigen Aufnahmeprofilierung 17 befestigt. Die frontseitige Aufnahmeprofilierung 17 ist in eine Befestigungsscheibe 18 integriert, die über hier nur teilweise gezeigte Radbefestigungsmittel 19 in Form von Radschrauben oder Radmuttern mit der Felge 4 koaxial zu dieser verbunden ist. Die Befestigungsscheibe 18 kann zum Beispiel bei einem Wechsel von Sommerrädern auf Winterräder direkt an dem Kraftfahrzeug mit dem Rad 2 montiert werden und dort permanent verbleiben. Zum Spannen der Traktionssegmenteinheit 10 mit ihren Traktionssegmenten 7 weist die Traktionssegmenteinheit 10 die integrierte Spanneinrichtung 20 auf. Somit verlaufen die Traktionssegmente 7 in ihrer Funktionsstellung auf dem Rad 2 gespannt von der Radrückseite 11 quererstreckt relativ zu einer Lauffläche 21 des Reifens 5 über diese zur Radfrontseite 16. Im Einsatzfall können mehrere der Traktionssegmenteinheiten 10 jeweils einzeln am rückseitigen Befestigungsring 13 und an der frontseitigen Aufnahmeprofilierung 17 manuell von Hand ohne Werkzeug befestigt werden. Das Kraftfahrzeug muss zur Montage der Traktionssegmenteinheiten 10 nicht angehoben werden, kann aber über einen geringen Weg verfahren werden, um auch im Bereich der Aufstandsfläche des Rades 2 Traktionssegmenteinheiten 10 anordnen zu können.

Fig. 2 zeigt eine schematische Rückansicht der Radanordnung nach Fig. 1 auf den Befestigungsring 13 und fünf verteilt angeordnete Traktionssegmenteinheiten 10 mit nur teilweise gezeigten Ketten (Traktionssegmenten 7). Der Befestigungsring 13 weist in Umfangsrichtung formschlüssig wirksame Profilierungen 22 in Form einer Verzahnung mit zwanzig kurzen Zähnen 23 und fünf langen Zähnen 24 sowie dazwischenliegenden Zahnlücken 25 auf. Dabei fungieren die langen Zähne 24 als haptische Positionierhilfen zum Ausrichten der rückseitigen Einhängemittel 11 der Traktionssegmenteinheiten 10. Sind die Traktionssegmenteinheiten 10 mit ihren rückseitigen Einhängemitteln 11 in Form von jeweils fünf Haken an den ersten Haltegliedern 8 entsprechend in die Zahnlücken 25 der durch die langen Zähne 24 begrenzten Bereiche eingehängt, verlaufen die Traktionssegmente 7, wie in Fig. 1 gezeigt, quererstreckt relativ zu der Lauffläche 21 des Reifens 5 über diese.

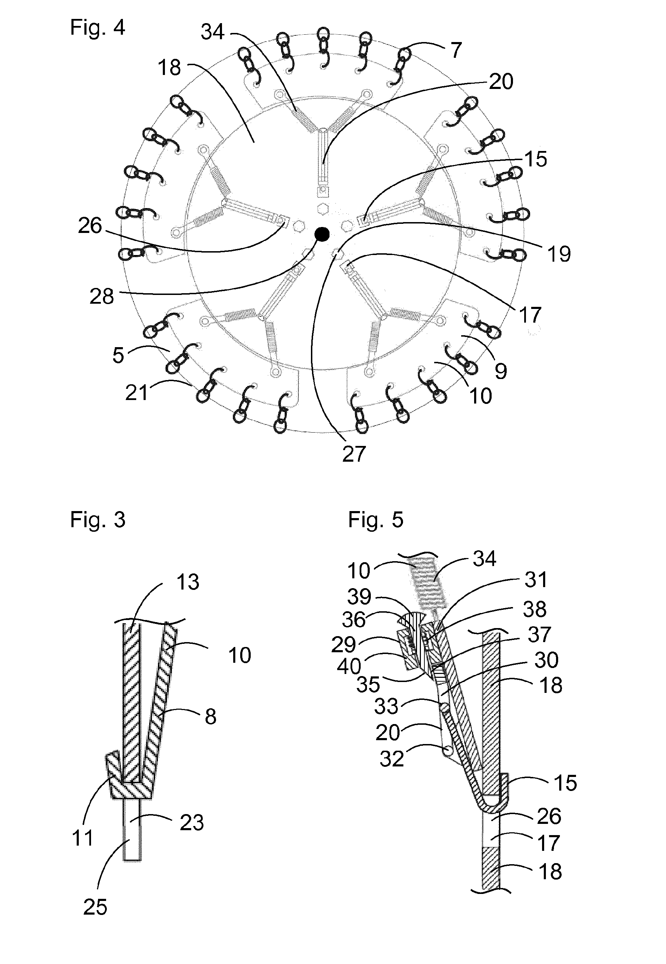

Fig. 3 zeigt in einem vergrößerten Ausschnitt III der Fig. 1 eines der rückseitigen Einhängemittel 11 in Form eines Hakens an dem ersten Halteglied 8 der Traktionssegmenteinheit 10 an der Radanordnung 1 gemäß Fig. 1, wobei der Haken 11 in eine der Zahnlücken 25 zwischen zwei Zähnen 23 des Befestigungsringes 13 eingreift und den Befestigungsring 13 hintergreift.

Fig. 4 zeigt in einer Frontansicht der Radanordnung nach Fig. 1 die Befestigungsscheibe 18 mit den fünf Traktionssegmenteinheiten 10 der Fig. 2. Jeweils die fünf Ketten (Traktionssegmente 7), die in Fig. 2 rückseitig durch eines der ersten Halteglieder 8 zu einer Traktionssegmenteinheit 10 zusammengefasst sind, sind frontseitig durch eines der zweiten Halteglieder 9 zusammengefasst. Die Traktionssegmenteinheiten 10 sind mit den frontseitigen Verbindungsmitteln 15 an der frontseitigen Aufnahmeprofilierung 17 in Form von fünf Aufnahmelöchern 26 eingehängt. Des Weiteren sind fünf Radbefestigungsmittel 19, die durch entsprechende Befestigungsöffnungen 27 in der Befestigungsscheibe 18 hindurchragen, und die in die Traktionssegmenteinheiten 10 integrierten Spanneinrichtungen 20 mit jeweils zwei Federspeicherelementen 34 erkennbar. Die Aufnahmelöcher 26 der frontseitigen Aufnahmeprofilierung 17 sind ausgehend von einer Radachse 28 in radialer Verlängerung der Befestigungsöffnungen 27 angeordnet. Somit ist sichergestellt, dass, wenn das Rad 2 und die Befestigungsscheibe 18 an einem Kraftfahrzeug montiert sind und die Traktionssegmenteinheiten 10 mit ihren rückseitigen Einhängemitteln 11 in die Zahnlücken 25 der durch die langen Zähne 24 begrenzten Bereiche des Befestigungsringes 13 gemäß Fig. 2 eingreifen, die Traktionssegmente 7 in ihrer Funktionsstellung auf dem Rad 2 gespannt quererstreckt relativ zu der Lauffläche 21 des Reifens 5 über diese verlaufen, wie in Fig. 1 für das Traktionssegment 7 gezeigt.

Fig. 5 zeigt einen vergrößerten Ausschnitt V des frontseitigen Verbindungsmittels 15 in Form des Hakens der Traktionssegmenteinheit 10, das in eines der Aufnahmelöcher 26 der frontseitigen Aufnahmeprofilierung 17 der Befestigungsscheibe 18 nach Fig. 1 und Fig. 4 eingehängt ist. Des Weiteren zeigt Fig. 5 die Spanneinrichtung 20 in Form eines Spannverschlusses nach Fig. 1 und Fig. 4, die mit einer Sicherungseinheit 29 ausgestattet ist. Durch ein Herunterdrücken eines Spannhebels 30 der Spanneinrichtung 20 in Richtung einer Basisplatte 31 der Spanneinrichtung 20 wird die Traktionssegmenteinheit 10 gespannt. Dabei ist der Spannhebel 30 drehbeweglich an einer ersten Aufhängung 32 der Basisplatte 31 gelagert, und der Haken 15 ist drehbeweglich an einer zweiten Aufhängung 33 des Spannhebels 30 gelagert. Des Weiteren umfasst die Spanneinrichtung 20 die Federspeicherelemente 34 in Form von Schraubenfedern. Über die Schraubenfedern 34 ist die Spanneinrichtung 20 mit dem zweiten Halteglied 9 der Traktionssegmenteinheit 10 verbunden, wie in Fig. 4 gezeigt. Der Spannhebel 30 ist in einer Übertotpunktlage, in der er an der Basisplatte 31 anliegt, arretiert. Zusätzlich ist die Spanneinrichtung 20 durch die auf der Basisplatte 31 befestigte Sicherungseinheit 29 gegen ein Lösen gesichert. Beim Herunterdrücken des Spannhebels 30 auf die Basisplatte 31 wird die Spanneinrichtung 20 automatisch durch die Sicherungseinheit 29 gesichert. Dabei gleitet der Spannhebel 20 auf einer Schrägfläche 35 eines Schaftes 36 auf, und schiebt den Schaft 36 in eine Freigabestellung. Der Schaft 36 ist in einem Sicherungseinheitsgehäuse 40 nur entlang seiner Achse axial beweglich, und nicht drehbeweglich um diese, was eine bleibende Ausrichtung der Schrägfläche 35 im Betrieb gewährleistet. Sobald der Spannhebel 30 an einer Unterseite 37 des Schaftes 36 ist, schiebt eine Sicherungsfeder 38 den Schaft 36 in eine Sicherungsstellung, wie in Fig. 5 gezeigt. Die Sicherungseinheit 29 kann durch ein axiales Ziehen an einem Handgriff 39, der mit dem Schaft 36 verbunden ist, entsichert werden, wobei der Schaft 36 in die Freigabestellung gebracht wird.

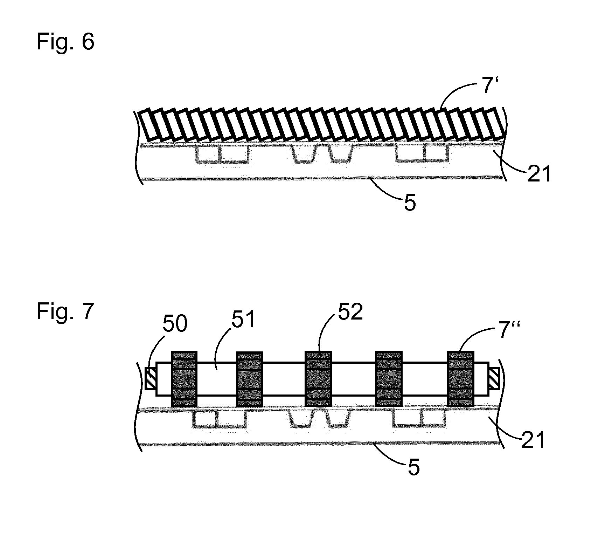

Im Unterschied zu dem Traktionssegment 7 in Form einer kleingliedrigen Kette der Fig. 1 zeigt Fig. 6 ein Traktionssegment 7' in Form eines Drahtseils aus 4-Kant-Drähten und Fig. 7 zeigt ein Traktionssegment 7" in Form eines Drahtseils 50, das abwechselnd mit kleinen Hülsen 51 und Spikes-Ringen 52 überzogen ist. Das jeweilige Traktionssegment 7', 7" verläuft in seiner Funktionsstellung ebenfalls quererstreckt über die Lauffläche 21 des Reifens 5.

In der gezeigten Ausführungsform weist das Traktionssystem fünf Traktionssegmenteinheiten auf. Alternativ kann ein Traktionssystem auch weniger, insbesondere drei, oder auch mehr, insbesondere sechs bis zehn Traktionssegmenteinheiten aufweisen. Entsprechend kann die Anzahl an Aufnahmeöffnungen der frontseitigen Aufnahmeprofilierung oder die Anzahl markierter Umfangspositionen der Positionierhilfe daran angepasst sein. Des Weiteren ist die Anzahl der rückseitigen Befestigungsmittel variabel. Es können weniger oder auch mehr als fünf Haken an dem rückseitigen Ende der Traktionssegmenteinheit angeordnet sein. Entsprechend ist die Mehrzahl der Zähne der formschlüssig wirksamen Profilierungen des Befestigungsringes daran angepasst. Die Befestigungsscheibe weist in der gezeigten Ausführungsform eine Gruppe von fünf Befestigungsöffnungen auf. Zusätzlich oder alternativ kann die Befestigungsscheibe eine oder mehrere weitere Gruppen von zum Beispiel vier oder sechs Befestigungsöffnungen aufweisen, damit die Befestigungsscheibe auf verschiedenen Kraftfahrzeugen mit unterschiedlicher Anzahl an Radbefestigungsmitteln montiert werden kann.

Zusätzlich oder alternativ zu den haptischen Positionierhilfen sind optische Positionierhilfen zum Ausrichten der rückseitigen Einhängemittel frontseitig an der Felge möglich. In der gezeigten Ausführungsform entspricht der radiale Durchmesser der Befestigungsscheibe dem radialen Durchmesser des Felgenwulstes. Die Befestigungsscheibe kann aber auch einen kleineren Durchmesser aufweisen, womit sie auch an Rädern mit kleinerem Durchmesser des Felgenwulstes einsetzbar ist. Alternativ kann die frontseitige Aufnahmeprofilierung nicht in der Befestigungsscheibe integriert, sondern einstückig mit der Felge ausgebildet sein. Des Weiteren können die Traktionssegmenteinheiten mit den ersten und zweiten Haltegliedern so flexibel gestaltet sein, dass sie für verschiedene Räder mit unterschiedlichen Durchmessern universell einsetzbar sind. Des Weiteren können sowohl die Spanneinrichtung als auch die Sicherungseinheit anders gestaltet sein. Insbesondere kann die Sicherungseinheit als ein von der Spanneinrichtung getrenntes Bauteil vorgesehen sein. In der gezeigten Ausführungsform sind die Traktionssegmente durch die ersten und zweiten Halteglieder zu den Traktionssegmenteinheiten zusammengefasst. Alternativ können die Traktionssegmente auch nicht zu Traktionssegmenteinheiten zusammengefasst sein, und jeweils einzeln an der rückseitigen Befestigungsfläche und an der frontseitigen Aufnahmeprofilierung befestigt sein. Zusätzlich oder alternativ zu den Traktionssegmenten in Form von kleingliedrigen Ketten, Drahtseilen aus 4-Kant-Drähten oder Drahtseilen, die abwechselnd mit kleinen Hülsen und Spikes-Ringen überzogen sind, können die Traktionssegmente Spikes und/oder Stollen und/oder Drahtseile mit runden Drähten und/oder großgliedrige Ketten zur Traktionserhöhung des Rades umfassen.

Wie das gezeigte und oben erläuterte Ausführungsbeispiel deutlich macht, stellt die Erfindung eine vorteilhafte Radanordnung für ein Kraftfahrzeug sowie ein Traktionssystem und eine Felge hierfür zur Verfügung, die eine einfache und schnelle Montage und Demontage des Traktionssystems an einem Rad mit der Felge ermöglicht und vielseitige Einsatzmöglichkeiten bei unterschiedlichen Radanordnungen zulässt, und sich insbesondere zur Traktionserhöhung des Kraftfahrzeuges bei winterlichen Straßenverhältnissen verwenden lässt.

## Patentansprüche

1. Radanordnung für ein Kraftfahrzeug umfassend ein Rad (2) mit einer Felge (4) und einem auf die Felge aufgezogenen Reifen (5), und ein Traktionssystem (3) für das Rad,
- wobei das Traktionssystem mehrere über einen Umfang (6) des Rades verteilt positionierbare Traktionssegmente (7, 7', 7") aufweist, wobei wenigstens zwei Traktionssegmente an einem rückseitigen Ende zur lösbaren Befestigung an einer dem Rad rückseitig zugeordneten Befestigungsfläche (13) mit mindestens einem rückseitigen Einhängemittel (11) versehen sind und die Traktionssegmente zur lösbaren Befestigung an wenigstens einer dem Rad frontseitig zugeordneten Aufnahmeprofilierung (17) mindestens ein frontseitiges Verbindungsmittel (15) zum Einhängen in die frontseitige Aufnahmeprofilierung aufweisen, sowie mit wenigstens einer Spanneinrichtung (20) zum Spannen der Traktionssegmente in ihrer Funktionsstellung auf dem Rad,
**dadurch gekennzeichnet, dass**
- die Befestigungsfläche (13) an einem rückseitigen Felgenwulst (14) der Felge (4) des Rades (2) fest angeordnet ist.

2. Radanordnung nach Anspruch 1, weiter **dadurch gekennzeichnet, dass** die Befestigungsfläche (13) als ein Befestigungsring ausgebildet ist, der einstückig oder durch stoffschlüssige Verbindung an dem Felgenwulst (14) fest angeordnet ist.

3. Radanordnung nach Anspruch 2, weiter **dadurch gekennzeichnet, dass** der Befestigungsring (13) in Umfangsrichtung formschlüssig wirksame Profilierungen (22) aufweist, in die das mindestens eine rückseitige Einhängemittel (11) an dem rückseitigen Ende des Traktionssegmentes (7, 7', 7") eingreift.

4. Radanordnung nach einem der Ansprüche 1 bis 3, weiter **dadurch gekennzeichnet, dass** insbesondere an der rückseitigen Befestigungsfläche (13) wenigstens eine haptische oder optische Positionierhilfe zum Ausrichten der rückseitigen Einhängemittel (11) für einen quererstreckten Verlauf der Traktionssegmente (7, 7', 7") relativ zu einer Lauffläche (21) des Reifens (5) vorgesehen ist.

5. Radanordnung nach einem der Ansprüche 1 bis 4, weiter **dadurch gekennzeichnet, dass** die wenigstens eine frontseitige Aufnahmeprofilierung (17) einstückig mit der Felge (4) ausgebildet ist oder in einer Befestigungsscheibe (18) integriert ist, die frontseitig koaxial zu dem Rad (2) fixierbar ist.

6. Radanordnung nach Anspruch 5, weiter **dadurch gekennzeichnet, dass** die Befestigungsscheibe (18) mit der Felge (4) über Radbefestigungsmittel (19), insbesondere Radschrauben, verbunden ist.

7. Radanordnung nach einem der Ansprüche 1 bis 6, weiter **gekennzeichnet durch** mindestens eine Sicherungseinheit (29) zum Sichern der Spanneinrichtung (20) gegen Lösen.

8. Radanordnung nach Anspruch 7, weiter **dadurch gekennzeichnet, dass** die mindestens eine Sicherungseinheit (29) zwischen einer Freigabe- und einer Sicherungsstellung verlagerbar ist.

9. Traktionssystem für eine Radanordnung nach einem der vorhergehenden Ansprüche mit mehreren Traktionssegmenten (7, 7', 7"), mit einer rückseitigen Befestigungsfläche (13) sowie mit wenigstens einer frontseitigen Aufnahmeprofilierung (17), mit wenigstens einer Spanneinrichtung (20) zum Spannen der Traktionssegmente, wobei die rückseitige Befestigungsfläche an dem rückseitigen Felgenwulst (14) der Felge (4) des Rades (2) vorgesehen ist.

10. Felge für eine Radanordnung nach einem der Ansprüche 1 bis 8, wobei die Felge (4) an einem rückseitigen Felgenwulst (14) einen nach Anspruch 2 fest angeordneten Befestigungsring (13) aufweist.
